# EUROPÄISCHE PATENTSCHRIFT

(11) **EP 0 982 185 B1**
(45) Veröffentlichungstag und Bekanntmachung des Hinweises auf die Patenterteilung: **25.06.2003**
(21) Anmeldenummer: 99112998.2
(22) Anmeldetag: 06.07.1999
(51) Int. Cl.: B60N 2/44

(54) **Fahrgastsitz mit Rückenlehne mit länglichen Vertiefungen**
Passenger seat backrest with longitudinal depressions
Dossier de siège de passager à dépressions longitudinales

(30) Priorität: 28.08.1998 DE 19839322
(43) Veröffentlichungstag der Anmeldung: 01.03.2000
(73) Patentinhaber: Vogelsitze GmbH, 76228 Karlsruhe (DE)
(72) Erfinder: Schuster, Frank, 73760 Ostfildern (DE); König, Thomas, 92637 Weiden (DE)
(74) Vertreter: Dimmerling, Heinz, Dipl.-Ing.

(56) Entgegenhaltungen:
- DE-A- 1 680 623
- DE-U- 29 710 388
- US-A- 3 323 835
- US-A- 5 462 339
- US-A- 5 575 533

## Beschreibung

Die Erfindung betrifft einen Fahrgastsitz zur Verwendung in einem Personenbeförderungsfahrzeug nach dem Oberbegriff des Anspruchs 1, welcher eine Rückenlehne aufweist.

Ein derartiger Fahrgastsitz wird überwiegend im öffentlichen Personennahverkehr verwendet. Er ist regelmäßig als Kunststoffspritzteil ausgebildet, wobei das Sitzteil und das Rückenteil einstückig ausgebildet sind.

Zwar kann ein derartiger Sitz auch mit einem Stoffüberzug und einer dünnen Polsterung versehen sein, jedoch wird aus Kostengründen häufig auf den Überzug beziehungsweise die Polsterung verzichtet.

Nachteilig bei einem derartigen Sitz ist zum einen, daß der Rücken eines auf ihm sitzenden Fahrgastes nahezu nicht belüftet wird, wodurch sich beim Fahrgast auf dem Rücken Schweiß bildet. Dies ist dem Fahrgast in der Regel sehr unangenehm. Es kann sogar vorkommen, daß die Schweißflecken durch die Kleidung sichtbar sind.

Des weiteren ist die Sitzschale des bekannten Fahrgastsitzes nicht sehr stabil. Denn aus Kostengründen und aus Gründen einer Gewichtsersparnis ist die Sitzschale recht dünnwandig ausgebildet Es kann daher zu einer mechanischen Verformung oder gar Zerstörung der Sitzschale kommen.

Aus der DT 1680623 ist ein gepolsteter Fahrersitz, insbesondere für landwirtschaftliche Fahrzeuge bekannt, bei dem das Sitzpolster mittels zweier tiefreichender Fugen dreigeteilt ist. Das Rückenpolster des Fahrgastsitzes ist leicht muldenförmig gestaltet und mit Lüftungsnuten versehen.

Des weiteren ist aus der nicht vorveröffentlichten EP 0 967 114 A2 eine Sitzund/oder Liegevorrichtung bekannt, welche einen stabilen Unterrahmen und eine nachgiebige Auflage aulweist, die ein Basisteil und ein Polster hat. Das Basisteil besteht aus einem quergestreiften aber längsflexiblen Material und wird beispielsweise durch ein dünnes, gewelltes Federblech aus Federstahl, Carbon-, Glas- oder Kevlarfasem, Titan und dergleichen realisiert.

Es ist Aufgabe der Erfindung, einen eingangs genannten Fahrgastsitz derart auszubilden, daß er mehr Komfort bietet und eine höhere Stabilität aufweist.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung weist die Rückenlehne längliche Vertiefungen auf. Hierdurch wird zum einen in vorteilhafter Weise erreicht, daß ein auf dem Fahrgastsitz sitzender Fahrgast mit seinem Rücken nicht vollflächig mit der Rückenlehne in Kontakt kommt. Durch die länglichen Vertiefungen gelangt Luft an den Rücken, wodurch eine Schweißbildung unterbunden wird.

Darüber hinaus bringen die länglichen Vertiefungen den Vorteil mit sich, daß die Rückenlehne hierdurch eine viel größere Steifigkeit erhält. Durch die durch die länglichen Vertiefungen erreichte Profilierung der Rückenlehne wäre es sogar möglich, die Rückenlehne in diesem Bereich dünnwandiger auszubilden.

Bei einer besonderen Ausführungsform der Erfindung erstrecken sich die Vertiefungen in ihrer Länge über etwa zwei Drittel der Länge der Rückenlehne. Im oberen Bereich der Rückenlehne befinden sich somit keine Vertiefungen. Da der Druck durch den Rücken durch auf die Rückenlehne im wesentlichen im mittleren Bereich erfolgt, kann im oberen Bereich auf die Vertiefungen verzichtet werden, ohne daß hierdurch Funktionseinbußen zu befürchten sind. Die Ausbildung der Vertiefungen über lediglich zwei Drittel der Länge der Rückenlehne wirkt sich nicht nur günstig im Hinblick auf die Werkzeugkosten aus, sondern gibt darüber hinaus der Rückenlehne noch ein optisch sehr ansprechendes Äußeres.

In vorteilhafter Weise erstrecken sich die Vertiefungen über nahezu die gesamte Breite der Rückenlehne. Hierdurch wird eine Versteifung der Rückenlehne über ihrer gesamten Breite erreicht.

Besonders vorteilhaft ist es, wenn die Rückenlehne wellenförmig ausgebildet ist. In vorteilhafter Weise verlaufen die Wellen näherungsweise sinusförmig, wobei die dem Rücken des Fahrgastes zugewandte Halbwelle abgeflacht und verbreitert ist. Die Breite der abgeflachten und verbreiterten Halbwelle ist etwa doppelt so groß wie die Breite der anderen Halbwelle. Die sinusförmige Ausbildung der Rückenlehne bringt zum einen Vorteile bei der Herstellung und zum anderen wird sie von einem auf dem Fahrgastsitz sitzenden Fahrgast als sehr angenehm empfunden. In vorteilhafter Weise sind die Vertiefungen etwa ein Zentimeter tief und beträgt der Mittenabstand von zwei Wellenbäuchen beziehungsweise -tälern etwa vier Zentimeter. Mit anderen Worten beträgt die Amplitude, das heißt die Auslenkung von einer Mittellinie, der sinusförmigen Wellen etwa einen halben Zentimeter und die Wellenlänge etwa vier Zentimeter.

Wenngleich ein annähernd sinusförmiger Verlauf der Wellen mit einer abgeflachten und verbreiterten Welle auch besonders vorteilhaft ist, könnte die Form auch aus Halbkreisen gebildet sein, wenn dies vorteilhaft sein sollte. Darüber hinaus könnten sich die Vertiefungen auch über die gesamte Länge der Rückenlehne erstrecken. Ebenso kann die Amplitude der Welle größer oder kleiner als ein halber Zentimeter sein und der Abstand von zwei Wellenbäuchen beziehungsweise -tälern mehr oder weniger als vier Zentimeter betragen.

Weitere Merkmale der vorliegenden Erfindung ergeben sich aus der nachfolgenden Beschreibung eines besonderen Ausführungsbeispiels unter Bezugnahme auf die Zeichnung.

Es zeigt
- Figur 1: einen erfindungsgemäßen Fahrgastsitz von vorne,
- Figur 2: den in Figur 1 dargestellten Fahrgastsitz von der Seite und
- Figur 3: einen Abschnitt des profilförmigen Verlaufs der Rückenlehne im Querschnitt.

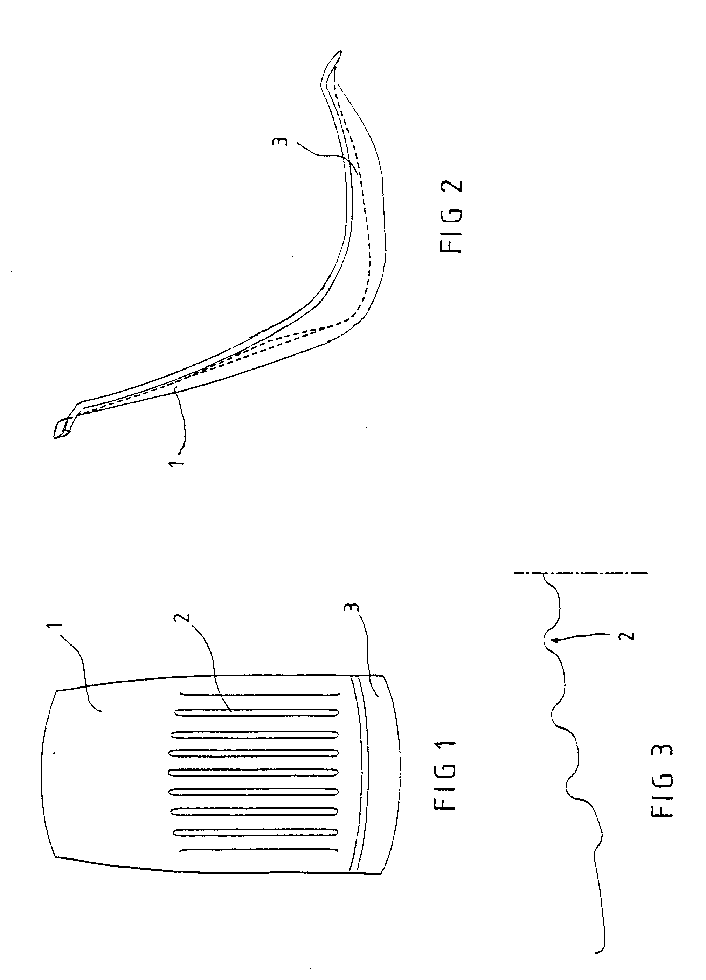

Wie insbesondere der Figur 1 entnommen werden kann, weist die Rückenlehne 1 eines Fahrgastsitzes sich länglich erstreckende Vertiefungen 2 auf. Die Vertiefungen 2 sind regelmäßig ausgebildet und haben einen näherungsweise sinusförmigen Verlauf mit einer abgeflachten und verbreiterten Welle, wie dies in der Figur 3 dargestellt ist. Die Breite der abgeflachten und verbreiterten Halbwelle ist etwa doppelt so groß wie die Breite der anderen Halbwelle. Der in Figur 3 dargestellte Wellenzug entspricht einer halben Rückenlehne, welche symmetrisch ausgebildet ist.

Der Fahrgastsitz besteht aus einem Kunststoffspritzteil und ist als einstückige Sitzschale ausgebildet. Das heißt, mit der Rückenlehne 1 ist einstückig ein Sitzteil 3 verbunden. Die Dicke der Sitzschale beträgt etwa fünf Millimeter. Die Rückenlehne 1 ist etwa 420 Millimeter breit und weist neun Vertiefungen 2 auf. Die Tiefe der Vertiefungen 2 beträgt etwa einen Zentimeter.

## Patentansprüche

1. Fahrgastsitz ohne Polsterung zur Verwendung in einem Personenbeförderungsfahrzeug, welcher eine Rückenlehne (1) aufweist,
**dadurch gekennzeichnet,**
**daß** die Rückenlehne längliche Vertiefungen (2) aufweist.

2. Fahrgastsitz nach Anspruch 1,
**dadurch gekennzeichnet,**
**daß** sich die Vertiefungen (2) in ihrer Länge über etwa zwei Drittel der Länge der Rückenlehne (1) erstrecken.

3. Fahrgastsitz nach Anspruch 1 oder 2,
**dadurch gekennzeichnet,**
**daß** sich die Vertiefungen (2) über nahezu die gesamte Breite der Rückenlehne (1) erstrecken.

4. Fahrgastsitz nach einem der Ansprüche 1 bis 3,
**dadurch gekennzeichnet,**
**daß** die Rückenlehne (1) wellenförmig ausgebildet ist.

5. Fahrgastsitz nach Anspruch 4,
**dadurch gekennzeichnet,**
**daß** die Wellen näherungsweise sinusförmig verlaufen mit einer abgeflachten und verbreiterten Halbwelle.

6. Fahrgastsitz nach einem der Ansprüche 1 bis 5,
**dadurch gekennzeichnet,**
**daß** die Vertiefungen (2) etwa ein Zentimeter tief sind.

7. Fahrgastsitz nach einem der Ansprüche 4 bis 6,
**dadurch gekennzeichnet,**
**daß** der Mittenabstand von zwei Wellenbäuchen beziehungsweise -tälern etwa 4 Zentimeter beträgt.

## Claims

1. Passenger seat without padding for use in a passenger vehicle, having a backrest (1), **characterised in that** the backrest has longitudinal depressions (2).

2. Passenger seat according to Claim 1, **characterised in that** the depressions (2) extend in their length over approximately two thirds of the length of the backrest (1).

3. Passenger seat according to Claim 1 or 2, **characterised in that** the depressions (2) extend over almost the entire width of the backrest (1).

4. Passenger seat according to one of the claims 1 to 3, **characterised in that** the backrest (1) is designed wave-shaped.

5. Passenger seat according to Claim 4, **characterised in that** the waves have an approximately sinusoidal form with a flattened and broadened half-wave.

6. Passenger seat according to one of the claims 1 to 5, **characterised in that** the depressions (2) are approximately one centimetre deep.

7. Passenger seat according to one of the claims 4 to 6, **characterised in that** the centre-to-centre distance of two wave crests or troughs is approximately 4 centimetres.

## Revendications

1. Siège de passager sans rembourrage destiné à être utilisé dans un véhicule pour le transport de personnes, qui comprend un dossier (1), **caractérisé en ce que** le dossier comporte des dépressions longitudinales (2).

2. Siège de passager selon la revendication 1, **caractérisé en ce que** les dépressions (2) ont une longueur s'étendant sur environ deux tiers de la longueur du dossier (1).

3. Siège de passager selon la revendication 1 ou 2, **caractérisé en ce que** les dépressions (2) s'étendent sur presque toute la largeur du dossier (2).

4. Siège de passager selon l'une des revendications 1 à 3, **caractérisé en ce que** le dossier (1) est réalisé en forme d'ondulations.

5. Siège de passager selon la revendication 4, **caractérisé en ce que** les ondulations s'étendent approximativement de façon sinusoïdale avec une demi-ondulation aplatie et élargie.

6. Siège de passager selon l'une des revendications 1 à 5, **caractérisé en ce que** les dépressions (2) ont une profondeur d'environ un centimètre.

7. Siège de passager selon l'une des revendications 4 à 6, **caractérisé en ce que** l'écart entre les milieux de deux ventres d'ondulations ou de deux creux d'ondulations est d'environ 4 centimètres.
